# EUROPEAN PATENT SPECIFICATION

(11) **EP 3 825 056 B1**
(45) Date of publication and mention of the grant of the patent: **06.09.2023**
(21) Application number: 20203716.4
(22) Date of filing: 23.10.2020
(51) Int. Cl.: B23K 26/035, B23K 26/70

(54) **PUSH DEVICE FOR LASER WELDING**
SCHUBVORRICHTUNG ZUM LASERSCHWEISSEN
DISPOSITIF POUSSOIR POUR SOUDAGE AU LASER

(30) Priority: 24.10.2019 KR 20190133288
(43) Date of publication of application: 26.05.2021
(73) Proprietor: Samsung SDI Co., Ltd., Yongin-si, Gyeonggi-do 17084 (KR)
(72) Inventor: RYU, Sang Hyun, 17084 Yongin-si (KR); JUNG, Hee Dong, 17084 Yongin-si (KR); AN, Seong Bae, 17084 Yongin-si (KR); HEO, Jin Gyu, 17084 Yongin-si (KR); ROH, Jae Hoon, 17084 Yongin-si (KR)
(74) Representative: Marks & Clerk LLP

(56) References cited:
- WO-A1-2017/220160
- US-A- 5 324 913

## Description

### BACKGROUND

### 1. Field

Embodiments relate to a push device for laser welding.

### 2. Description of the Related Art

In general, as portable wireless devices such as video cameras, mobile phones, and portable computers become light-weight and equipped with high level functions, a lot of researches have been made on secondary batteries used as a driving power source. Such secondary batteries include, for example, a nickel-cadmium battery, a nickel-hydrogen battery, a nickel-zinc battery, a lithium secondary battery, etc. Among these batteries, the lithium secondary battery is rechargeable, may be small in size but with high capacity, and has high operating voltage and high energy density per unit weight, and thus, the lithium secondary battery has been widely used in high-tech electronic devices. One example of a cylindrical lithium secondary battery among the lithium secondary batteries is disclosed in Korean Registered Patent No. 10-0770111 (registration date: October 18, 2007).

In the cylindrical lithium secondary battery, a cap assembly including a current interrupt device (CID) is welded and coupled to a can. To this end, a welding apparatus such as an ultrasonic welding apparatus or a laser welding apparatus is used.

US 5324913 A discloses a method and apparatus for laser welding.

CN109048061 discloses a push device in accordance with the preamble of claim 1.

### SUMMARY

An aspect of the present disclosure provides a push device for laser welding, which improves a structure of a push device for welding a secondary battery.

According to at least one of the embodiments, a push device for laser welding includes: a main body configured to be coupled to one side of a welding apparatus and including a hinge part disposed at one side thereof and a coupling part spaced apart from the hinge part; a support arm having one end rotatably coupled to the hinge part and the other end extending in a direction opposed to the hinge part and rotatable within a preset angle range; and a pusher unit detachably coupled to the other end of the support arm configured to push an adsorption jig configured to adsorb an object to be welded at a welding position.

The support arm is rotatable (*e.g.* rotated) from a lift down position at which it is coupled to the coupling part and moveable (*e.g*. moved) to a lift up position at which it is rotated in a direction away from the coupling part.

The hinge part and the coupling part may be disposed on the same straight line, and the main body may further include a guide part spaced below from the hinge part and the coupling part and disposed parallel to the support arm while supporting a lower side of the support arm in a state in which the support arm is coupled to the coupling part.

The support arm may form an obtuse angle with the guide part at the lift up position.

The coupling part may include a cylindrical body and a head having a diameter greater than that of the body and integrated with the body, and a catching groove inserted to the body may be defined at one side of the support arm.

The guide part may include a support block disposed parallel to the support arm in a state in which the support arm is coupled to the coupling part, a guide rib protruding upward from one side end of the support block, and a restriction rib extending upward from the other side end of the support block.

The support arm may be disposed between the guide rib and the main body at the lift down position and supported by contacting one side of the restriction rib at the lift up position.

The pusher unit may include: a push plate detachably coupled to the other end of the support arm; a support bracket coupled to one side of the push plate; and a pusher coupled to the push plate and supported by the support bracket configured to push the adsorption jig.

The push plate may include a reflection surface having a cone shape (*e.g.* circular plat shape) in which a hollow hole through which a laser beam may pass (*e.g*. passes) is defined and having a diameter gradually increasing from the hollow hole to an edge thereof in an irradiated direction of the laser beam and a pusher holder protruding in a direction opposed to the reflection surface and coupled with the pusher.

The pusher holder may have a hexahedral shape in which both ends of a surface facing the pusher have a ' 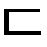 '-shape surrounding both side surfaces or top and bottom surfaces, which face each other, of the pusher, and an air inflow hole is defined in each of both facing side surfaces.

The pusher unit may further include an air supply part coupled with the air inflow hole to supply external air.

The push plate may further include one pair of air injection holes that face each other on the reflection surface and communicate with the air inflow hole.

The pusher may include: a pusher body having an upper portion bent in a direction of the reflection surface and a lower portion bent in a direction opposed to the reflection surface; a push surface protruding in a direction from the bent lower portion of the pusher body that is away from the reflection surface (*e.g.* to the adsorption jig); and a welding guide hole passing through the push surface and having an opened upper end, so that the laser beam may pass (*e.g*. passes) therethrough.

In a state in which a bent upper portion of the pusher body closely contacts an upper side of the pusher holder, the pusher body may be coupled to the pusher holder by a plurality of guide pins passing through the bent upper portion of the pusher body and inserted the upper side of the pusher holder and a coupling member configured to couple the bent upper portion and the upper side of the pusher holder.

The main body may be obtained as a plurality of blocks are mutually movably coupled, and the support arm may be coupled to one of the blocks. Here, the push device may further include a plurality of micro-meters installed on the main body and arranged at different angles to move a position of one coupled with the support arm among the blocks from another.

The pusher unit may be mounted or replaced at the lift up position.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIGS. 1 and 2 are perspective views illustrating a push device for laser welding according to an embodiment of the present disclosure;
FIG. 3 is an enlarged perspective view of a main portion of the push device for laser welding according to an embodiment of the present disclosure;
FIG. 4 is an exploded perspective view of the pusher unit of the push device for laser welding in FIG. 2;
FIG. 5 is an exploded perspective view of the pusher unit of the push device for laser welding in FIG. 2;
FIG. 6 is a rear view illustrating a rear surface of a pusher unit in FIG. 5;
FIG. 7 is an exploded perspective view in a different direction of the pusher unit in FIG. 5;
FIG. 8 is a plan view illustrating an area in which the pusher unit in FIG. 5 contacts a CID mat; and
FIG. 9 is a front view illustrating lift down and up states of the push device for laser welding in FIG. 2.

### DETAILED DESCRIPTION

The embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

Also, in the figures, a thickness or dimension of each of the layers is exaggerated for clarity of illustration. As used herein, the term "and/or" includes any and all combinations of one or more of the associated listed items. Also, in this specification, it will be understood that when an element A is referred to as being "connected to" an element B, the element A can be directly connected to the element B, or an intervening element C may be present between the elements A and B so that the element A can be indirectly connected to the element B.

The terms used herein are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

It will be understood that, although the terms first, second, etc. may be used herein to describe various members, components, regions, layers and/or sections, these members, components, regions, layers and/or sections should not be limited by these terms. These terms are only used to distinguish one member, component, region, layer and/or section from another. Thus, a first member, a first component, a first region, a first layer and/or a first section discussed below could be termed a second member, a second component, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "beneath" or "below" other elements or features would then be oriented "above" or "upper" the other elements or features. Thus, the term "beneath" can encompass both an orientation of "above" and "below".

Hereinafter, preferred embodiments will be described in detail with reference to the accompanying drawings. For convenience, hereinafter, the description will be made assuming that a direction in which a cylindrical secondary battery is disposed is defined as a front direction, and a direction opposite thereto is defined as a rear direction.

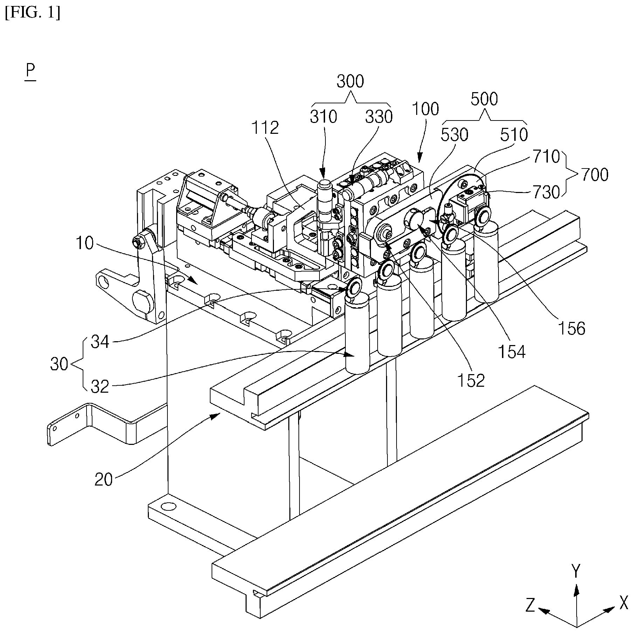

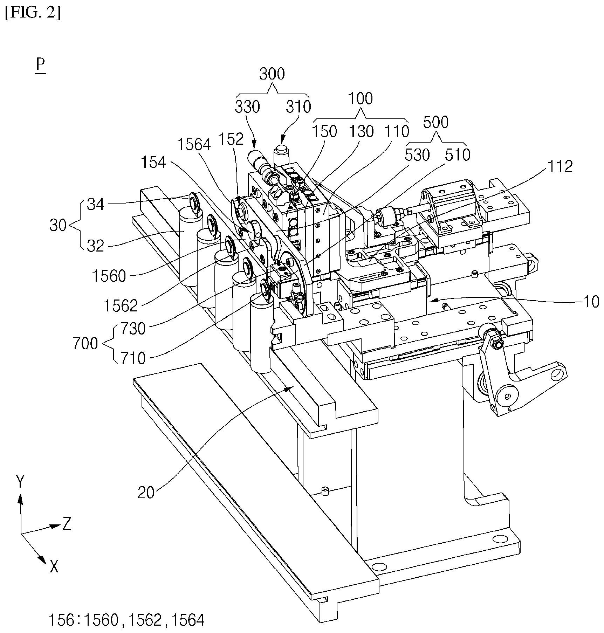

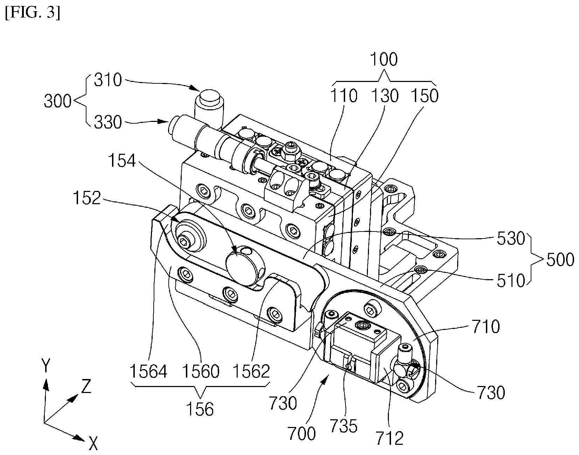

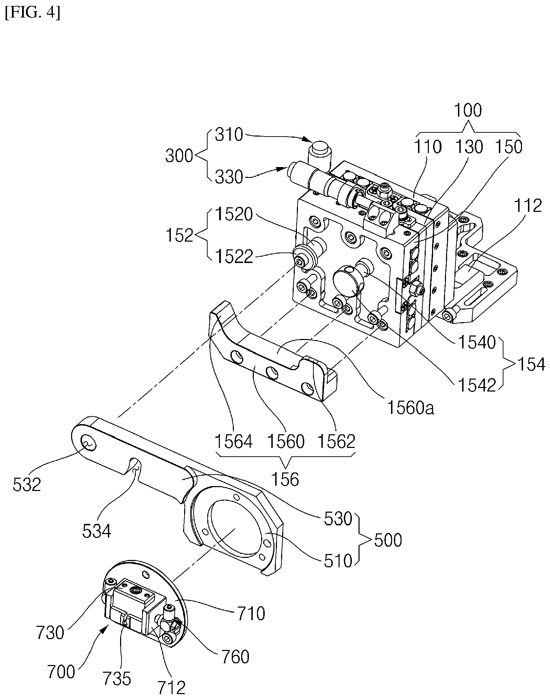

FIGS. 1 and 2 are perspective views illustrating a push device for laser welding according to an embodiment of the present disclosure. FIG. 3 is an enlarged perspective view of a main portion of the push device for laser welding according to an embodiment of the present disclosure. FIG. 4 is a partial exploded perspective view of the push device for laser welding in FIG. 2.

As illustrated in FIGS. 1 and 2, a push device P for laser welding is installed at one side of a main frame 10 of a laser welding apparatus (not shown). The push device P includes a support unit and a pusher unit 700.

The support unit includes a main body 100 coupled on the main frame 10, one pair of micro-meters 300 for adjusting a precise position of the main body 100, and a support arm 500 rotatably installed at one side of the main body 100. A driving unit (not shown) for driving the micro-meters 300 may be provided in the main body 100.

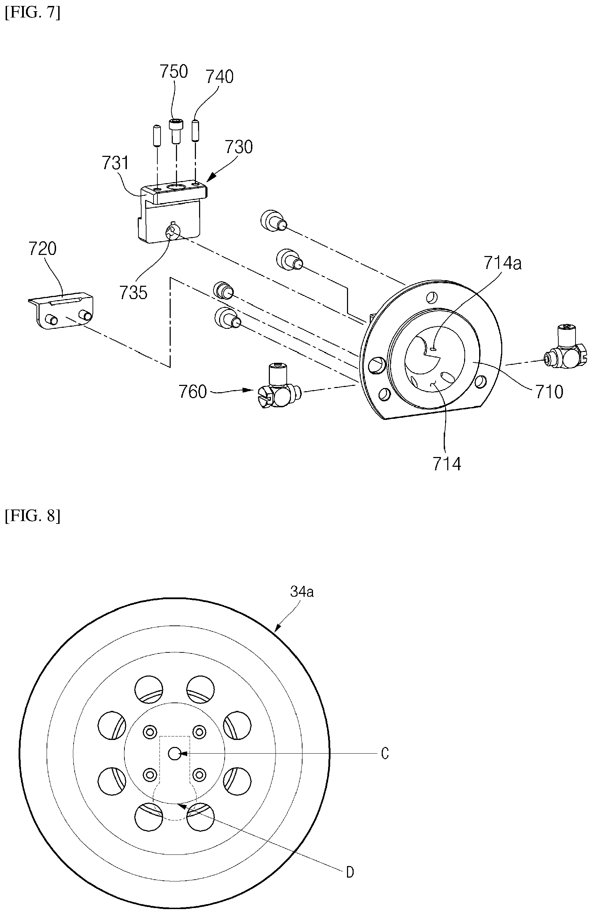

The pusher unit 700 is detachably coupled to the support arm 500 and serves to push a CID mat 34a (refer to FIG. 8) constituting a cap assembly 34 of a cylindrical secondary battery 30. The CID mat 34a is temporarily fixed by an adsorption jig (not shown), and laser welding is initiated in a state in which the pusher unit 700 pushes and closely contacts the CID mat 34a. The pusher unit 700 includes a push plate 710, a support bracket 720, a pusher 730 coupled to the push plate 710 and supported by the support bracket 720, and an air supply part 760 supplying air to the pusher 730.

Firstly, the support unit will be described among the above-described components.

As illustrated in FIGS. 1 to 4, the main body 100 approximately has a box shape. The precise position of the main body 100 is adjusted by the micro-meters 300. To this end, an external shape that is the box shape of the main body 100 is divided into a plurality of pieces, and the plurality of pieces are coupled in a mutually movable manner. In this embodiment, the main body 100 is divided into three pieces along a Z-axis direction. That is, the main body 100 include a rear block 110 fixed to the main frame 10 and a middle block 130 and a front block 150, which are coupled on the rear block 110 in a movable manner.

Also, the support arm 500 is rotatably coupled to one side of the main body 100, and a coupling frame 112 is provided on the other side of the main body 100. A plurality of micro-meters 300 are installed at another side of the main body 100, on which the support arm 500 and the coupling frame 112 are not provided. A hinge part 152, a coupling part 154, and a guide part 156 are provided on the main body 100 for being coupled with the support arm 500.

The rear block 110 is coupled to the main frame 10 of the laser welding apparatus by the coupling frame 112. The rear block 110 is disposed at a rear side of the main body 100. The middle block 130 is movably coupled at a front side of the rear block 110. The coupling frame 112 is a structure for only fixing the rear block 110 onto the main frame 10. That is, the coupling frame 112 is not a main component of the embodiment. Thus, detailed description thereof will be omitted.

The middle block 130 is disposed between the rear block 110 and the front block 150. A first micro-meter 310 for adjusting a position in a Y-axis direction is installed on one side surface of the middle block 130 in the Y-axis direction, and a second micro-meter 330 for adjusting a position in a X-axis direction is installed on a top surface of the middle block 130 in the X-axis direction (refer to FIG. 3 for the X-axis and Y-axis directions). The middle block 130 may be coupled with the front block 150 and moved in the Y-axis direction by the first micro-meter 310. When the position of the middle block 130 is adjusted, the front block 150 coupled to the middle block 130 is also moved in conjunction with the middle block 130, and a position of the support arm 500 is also adjusted.

The front block 150 may be disposed at a front side of the middle block 130 and moved in the X-axis direction by the second micro-meter 330. When the position of the front block 150 is adjusted, the position of the support arm 500 coupled to the front block 150 is also adjusted.

The above-described hinge part 152, the coupling part 154, and the guide part 156 are provided on the front block 150, and the support arm 500 is coupled thereto.

As illustrated in FIGS. 3 and 4, the hinge part 152 is disposed at a lower one side of the front side of the front block 150. The hinge part 152 may include a support shaft 1520 integrated to a front surface of the front block 150 and a fixing washer 1522 detachably coupled to the support shaft 1520. The support shaft 1520 has a cylindrical shape, and one side of the support arm 500 that will be described later is inserted to the support shaft 1520. The fixing washer 1522 is coupled to the support shaft 1520 in a state in which the support arm 500 is inserted to the support shaft 1520 to prevent the support arm 500 from being separated.

As illustrated in FIGS. 3 and 4, the coupling part 154 is disposed on a front surface of the front block 150. The coupling part 154 is spaced a predetermined distance from the hinge part 152 and disposed on the same line as the hinge part 152. The coupling part 154 includes a cylindrical body 1540 and a head 1542 having a diameter greater than that of the body 1540. The body 1540 and the head 1542 are integrated with each other. The coupling part 154 is integrated to the front block 150 or inserted and fixed to the front block 150. One side of the support arm 500 is inserted to the body 1540 and temporarily fixed on the body 1540 (this will be described later). The guide part 156 restricting a rotation angle of the support arm 500 and guiding a fixing position thereof is provided at a lower side of the hinge part 152 and the coupling part 154.

The guide part 156 is provided at a lower side of the front block 150 that is spaced a predetermined distance from the hinge part 152 and the coupling part 154. The guide part 156 may include may include a support block 1560 supporting a lower side of the support arm 500, a guide rib 1562 disposed at one side of the support block 1560, and a restriction rib 1564 disposed at the other side of the support block 1560.

The support block 1560 may be integrated with the front block 150 while extending to a front side from a front lower side of the front block 150. The support block 1560 may have a predetermined thickness and a length corresponding to or greater than a width of the front block 150. Since the support block 1560 supports the lower side of the support arm 500, the support block 1560 may have a width corresponding to or greater than a width of the support arm 500. The support block 1560 restricts a rotation angle of the support arm 500 from further rotating in a downward direction in a state in which the support arm 500 is disposed at a welding position of the pusher unit 700 (hereinafter, referred to as a lift down position). A top surface 1560a of the support block 1560 may be parallel to the lower side in a longitudinal direction of the support arm 500 at the lift down position of the support arm 500. Also, the top surface 1560a of the support block 1560 may be disposed parallel to a virtual central axis line connecting the hinge part 152 and the coupling part 154.

The guide rib 1562 is disposed at one side end of the support block 1560 and faces one side of a front surface of the support arm 500 at the lift down position of the support arm 500. That is, the guide rib 1562 is disposed at a front side end of the support block 1560.

Also, the guide rib 1562 has a shape protruding upward from the support block 1560. Since the guide rib 1562 protrudes in an upward direction, the support arm 500 is disposed between the guide rib 1562 and the front block 150 at the lift down position of the support arm 500. The guide rib 1562 may have a circular or rectangular shape. However, the embodiment of the present disclosure is not limited thereto. For example, the guide rib 1562 may have all sorts of shapes capable of guiding the support arm 500. The restriction rib 1564 is disposed at the other side end of the guide part 156, which is opposed to the guide rib 1562.

The restriction rib 1564 is disposed at the other end in a longitudinal direction of the support block 1560 and extends upward from the support block 1560. The restriction rib 1564 serves to control the rotation angle of the support arm 500 when the support arm 500 is rotated. The support arm 500 may maintain a rotated state instead of being restored to an original position in a state in which the support arm 500 is rotated more than about 90° with respect to a top surface of the support block 1560 (hereinafter, referred to as a lift up position).

To this end, the restriction rib 1564 may support the support arm 500 to prevent the support arm 500 from further rotating when the support arm 500 is rotated to a position at which the support arm 500 forms an obtuse angle with the top surface of the support block 1560. Since a center of gravity is moved to an opposite direction of an original position when the support arm 500 forms the obtuse angle with the top surface of the support block 1560, the support arm 500 may maintain a state rotating to the lift up position.

For example, the restriction rib 1564 may be disposed at a position at which the support arm 500 forms about 120° with the top surface of the support block 1560 at the lift up position.

Although not shown in the drawing, as a groove is defined on the restriction rib 1564, and the support arm 500 is inserted to the groove, the lift up position may be maintained.

Referring to FIGS. 1 to 4, the one pair of micro-meters 300 are provided as described above (the first and second micro-meters). The one pair of micro-meters 300 are installed perpendicularly to each other to move the middle block 130 and the front block 150 in two directions. Precise positions of the middle block 130 and the front block 150 are adjusted by the micro-meters 300.

The first micro-meter 310 is installed on a left surface of the middle block 130 to move the middle block 130 in the Y-axis direction on the basis of FIG. 3. The second micro-meter 330 is installed on the top surface of the middle block 130 to move the front block 150 in the X-axis direction.

The micro-meters 300 are applied for improving precision when a position of the push device P is set. The micro-meters 300 may include a coil spring (not shown). The micro-meters 300 are not the main component of the embodiment. Thus, detailed description thereof will be omitted.

Hereinafter, the support arm 500 will be described.

As illustrated in FIGS. 3 and 4, the support arm 500 has a bar shape having a predetermined length and width and is disposed at a front side of the front block 150 of the main body 100. The support arm 500 has one end rotatably coupled to the hinge part 152 and the other end extending in a direction opposed to the hinge part 152. The pusher unit 700 that adsorbs the cap assembly 34 is detachably coupled to the other end of the support arm 500. The end coupled with the pusher unit 700 may have a shape corresponding to that of the pusher unit 700. In the support arm 500, a portion coupled with the pusher unit 700 is defined as a pusher assembly part 510, and the remaining portion except for the pusher assembly part 510 is defined as a rotation support part 530.

As the support arm 500 is rotatably installed, when the pusher unit 700 is replaced due to size variation of the secondary battery 30 to be welled, a working space may be secured, and a working time may be reduced. Thus, an effect of improving convenience of a worker may be obtained. Also, as the working space is secured by the rotation of the support arm 500, a position setting deviation depending on proficiency of the worker during an attaching and detaching operation of the pusher unit 700 may be minimized.

As a cylindrical insertion hole 532 is defined at one end of the rotation support part 530, the rotation support part 530 is inserted to a support shaft 1520 of the hinge part 152. Also, a catching groove 534 inserted to the body 1540 of the coupling part 154 is defined at one side in a longitudinal direction of the rotation support part 530.

The catching groove 534 is defined at a lower side in the longitudinal direction of the rotation support part 530 on the basis of FIG. 2. The catching groove 534 is defined at a position corresponding to a position of the body 1540 of the coupling part 154. As the support arm 500 is rotated from the lift up position to the lift down position, the catching groove 534 is inserted to the body 1540 of the coupling part 154, and the support arm 500 is temporarily fixed.

Here, the expression "temporarily fixed" represents that a coupled state is maintained before the worker holds and rotates the support arm 500 as an opposite meaning of permanently fixed.

Also, the lift up position represents a position of the support arm 500 in a state in which the support arm 500 is separated from the coupling part 154 and rotated to contact the restriction rib 1564. The lift down position represents a state in which the catching groove 534 of the support arm 500 is inserted to the coupling part 154 and temporarily fixed.

Next, the pusher unit 700 detachably coupled to the support arm 500 will be described.

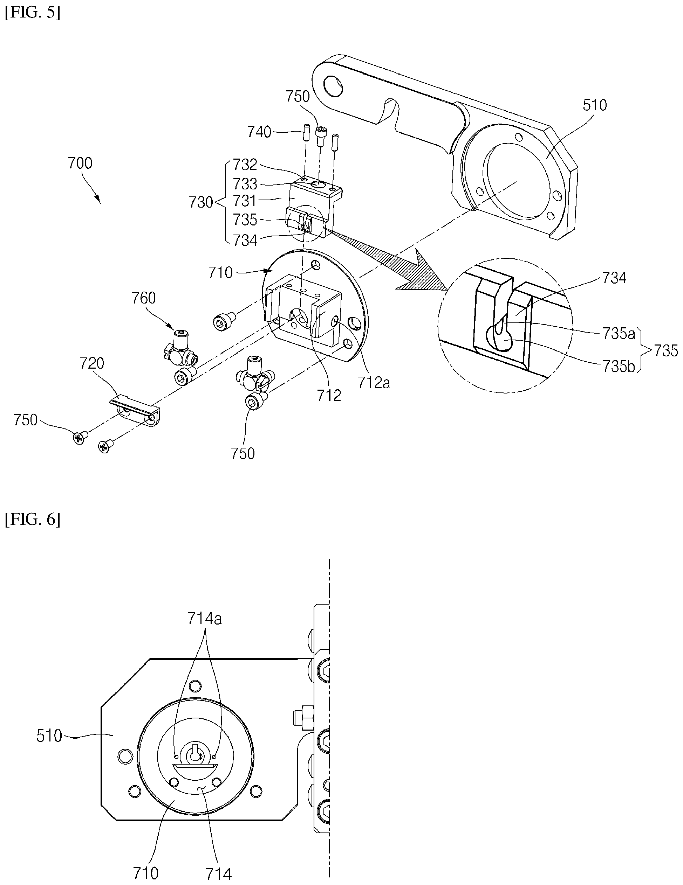

FIG. 5 is an exploded perspective view of the pusher unit of the push device for laser welding in FIG. 2. FIG. 6 is a rear view illustrating a rear surface of the pusher unit in FIG. 5. FIG. 7 is an exploded perspective view in a different direction of the pusher unit in FIG. 5. FIG. 8 is a plan view illustrating an area in which the pusher unit in FIG. 5 contacts the CID mat.

As illustrated in FIGS. 4 and 5 to 7, the pusher unit 700 includes: a push plate 710 detachably coupled to the pusher assembly part 510 of the support arm 500; a support bracket 720 coupled to the push plate 710; a pusher 730 coupled by the push plate 710 and the support bracket 720; a plurality of pins 740 and a coupling member 750 for fixing and supporting; and an air supply part 760 supplying air to the push plate 710.

As illustrated in FIGS. 5 to 7, the push plate 710 is detachably coupled to the support arm 500 and supports the pusher 730. The push plate 710 has an approximately circular plate shape in which a through-hole is defined at a central portion thereof so that a laser beam may pass *(e.g.* passes) therethrough. The through-hole may have various shapes such as an elliptical or polygonal shape.

The push plate 710 may be made of a metal material that endures a temperature increase by the laser beam and is hardly damaged by welding foreign substances generated during laser welding such as spatter or fume. The entire push plate 710 may be made of the same material, and a reflection surface 714 that will be described later may be made of different materials. The material of the push plate 710 may be determined in consideration of strength satisfying a necessary wear resistance and a reflectance of the reflection surface 714.

A pusher holder 712 is disposed at a front side of the push plate 710, and the reflection surface 714 is disposed at a rear side of the push plate 710. The laser beam is incident to the reflection surface 714 and irradiated in a front direction during the laser welding.

As illustrated in FIGS. 4 and 5, the pusher holder 712 is disposed at a front surface of the push plate 710, and the pusher 730 is inserted to the pusher holder 712. The pusher holder 712 has an approximately hexahedral shape protruding from the front surface of the push plate 710. Front both side ends of the hexahedral shape protrude in the shape of an approximately ' 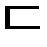 '-shape. The pusher holder 712 may support the pusher 730 such that protruding portions of the pusher holder 712 surround mutually facing left and right sides of the pusher 730. Although not shown in the drawing, the pusher holder 712 may support the pusher 730 such that the protruding portions of the pusher holder 712 surround mutually facing top and bottom sides of the pusher 730.

A plurality of coupling holes (reference numeral not given) may be defined in a top surface of the pusher holder 712. The guide pin 740 and the coupling member 750, which will be describe later, are inserted to the coupling holes when the pusher 730 is coupled. Also, an air inflow hole 712a may be defined at each of both side surfaces of the pusher holder 712.

Referring to FIG. 5, the air inflow hole 712a is recessed from the side surface of the pusher holder 712. As illustrated in FIG. 4, as the air supply part 760 is coupled to the air inflow hole 712a, the external air is supplied to the air inflow hole 712a. The air inflow hole 712a communicates with an air injection hole 714a defined at the reflection surface 714 in FIG. 6. The external air supplied through the air inflow hole 712a is injected through the air injection hole 714a to prevent foreign substances generated during the laser welding from being adsorbed to the reflection surface 714.

The reflection surface 714 is disposed at a rear surface of the push plate 710 to reduce damage of the push plate 710 caused by back reflection (light (laser beam) reflected and scattered to the surroundings during laser irradiation) generated during the laser welding. The reflection surface 714 has a preset radius from the hollow hole of the push plate 710. A diameter of the reflection surface 714 gradually increases in a direction from the hollow hole to an edge of the rear surface of the push plate 710. Thus, the reflection surface 714 has a cone shape that is inclined from the edge of the rear surface of the push plate 710 to the hollow hole.

The reflection surface 714 may be made of the same material as the push plate 710 or a material different from the push plate 710 in consideration of reflectance. For example, the push plate 710 may be made of a SUS material such as SKD 11. The SKD 11 has an advantage in that the SKD 11 has a reflectance satisfying necessities in a laser welding process and high wear resistance against foreign substances such as spatter because of high strength thereof. However, the embodiment of the present disclosure is not limited to the material of the reflection surface 714. For example, the material of the reflection surface 714 may be changed in consideration of the reflectance and the strength. The above-described air injection hole 714a is defined on the reflection surface 714.

As illustrated in FIGS. 6 and 7, one pair of air injection holes 714a are defined to face each other on the reflection surface 714. The air injection holes 714a have a shape communicating with the above-described air inflow hole 712a. Since the reflection surface 714 has the cone shape, and the air injection holes 714a face each other, air injected through the air injection holes 714a may be injected in the shape similar to reflection surface 714. That is, the air injected through the air injection holes 714a is injected in the shape of 'V' to be concentrated toward the hollow hole. Thus, foreign substances may be minimally adsorbed and deposited to surroundings of the hollow hole, at which the welding foreign substances are easily accumulated.

When the welding foreign substances are accumulated around the hollow hole, the area through which the laser beam passes may be narrowed to disturb the laser irradiation and degrade a welding quality. To prevent this, the pusher unit 700 is essentially separated and cleaned.

While typically, the pusher unit 700 is separated and cleaned every four hours, and the entire pusher unit 700 is disassembled to separate and clean each component every three weeks, in case of including the air injection hole 714a, the welding quality may be maintained even when the pusher unit 700 is cleaned one time a day, and the entire pusher unit 700 is disassembled and cleaned every six weeks.

The support bracket 720 is coupled to the push plate 710 having the above-described structure, and the pusher 730 is coupled to the push plate 710 by the pusher holder 712 and the support bracket 720.

As illustrated in FIGS. 5 and 7, the support bracket 720 is bent into a ' 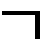 '-shape, and a bent top surface supports a lower side of the pusher 730, and a bottom surface is coupled to the front surface of the push plate 710. The support bracket 720 is disposed at a lower side of the pusher holder 712 of the push plate 710 to support the lower side of the pusher 730. As a through-hole is defined in a bottom surface of the support bracket 720, the support bracket 720 may be coupled to the push plate 710 by the coupling member 750.

As illustrated in FIGS. 4, 5, and 7, the pusher 730 is inserted and coupled to the pusher holder 712 of the push plate 710 and supported by the support bracket 720. The pusher 730 includes a pusher body 731 having a polyhedral shape having an upper side bent in a rear direction and a lower side bent in a front direction in terms of the side surface as in FIG. 5.

The bent upper side of the pusher body 731 is bent parallel to the top surface of the pusher holder 712 and coupled in a state contacting the top surface of the pusher holder 712. The bent lower side of the pusher body 731 protrudes in the front direction.

One pair of guide holes 732 pass through the bent upper side of the pusher body 731, and one coupling hole 733 passes through between the guide holes 732. The guide pin 740 is inserted to the guide hole 732, and the coupling member 750 is coupled to the coupling hole 733. As the pusher body 731 is temporarily fixed in accordance with a coupling position of the pusher holder 712 by the guide pin 740, and then the coupling member 750 is coupled, the pusher 730 is coupled to the pusher holder 712. Since the pusher 730 may be separated from the pusher holder 712 by separating only the coupling member 750, the pusher 730 may be extremely easily separated.

Since a front surface of the bent lower side of the pusher body 731 pushes an adsorption jig and the CID mat 43a (refer to FIG. 8) that is an object to be welded, the front surface is defined as a push surface 734. The push surface 734 is a portion protruding in the front direction from the bent lower side of the pusher body 731. The entire bent lower side of the pusher body 731 may protrude to provide the push surface 734 or only a portion of the bent lower side may protrude to provide the push surface 734. A welding guide hole 735 is defined on the push surface 734.

The welding guide hole 735 passes through from the push surface 734 to a rear surface of the pusher body 731. The welding guide hole 735 has a shape for guiding an optimized welding position when the CID mat 34a that will be described later is welded.

FIG. 8 is a plan view illustrating an area of the CID mat contacting the pusher unit in FIG. 5.

Referring to FIGS. 5 and 8, the welding guide hole 735 may have a shape in which a rectangular area is connected to a circular area. The welding guide hole 735 has a shape corresponding to that of a welded portion of the CID mat 34a. Also, the welding guide hole 735 may have a shape in which an upper end of the push surface 734 is opened.

More specifically, an ultrasonic welded portion C for constituting the cap assembly 34 may be disposed at a central portion of the CID mat 34a as in FIG. 8. Thus, the laser beam is necessary to be set so that the laser beam is not irradiated to the ultrasonic welded portion C during the laser welding. To this end, the welding guide hole 735 may cover the ultrasonic welded portion C and the surroundings thereof in the form of approximately rectangular shape. A portion covering the ultrasonic welded portion C may be defined as a first guide hole 735a. Since a laser welded portion D is spaced apart from the ultrasonic welded portion C, the laser welded portion D my be guided by defining a wider circular hole than the ultrasonic welded portion C (a diameter of a second guide hole is greater than a width of the first guide hole). A portion guiding the laser welded portion D may be defined as a second guide hole 735b.

Since the welding guide hole 735 is opened toward the upper end of the push surface 734, the first guide hole 735a may have an opened upper end. Thus, welding gases such as fumes generated during the laser welded portion D is welded may be discharged through the opened upper end of the first guide hole 735a. Since the opened upper end of the first guide hole 735a is not blocked although the adsorption jig and the CID mat 34a closely contact the push surface 734, the welding gases such as fumes may be discharged to the outside of he pusher unit 700.

As described above, in the push device P for laser welding, the support arm 500 is moved from the lift down position to the lift up position to secure the working space for cleaning or replacing the pusher unit 700 or the pusher 730.

Hereinafter, position setting of the push device P for laser welding and an operation of the support arm 500 at the lift up position and the lift down position will be described in detail.

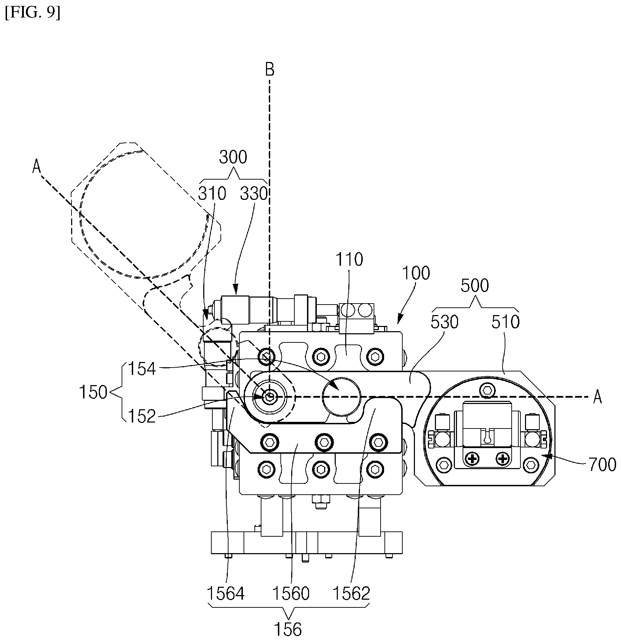

FIG. 9 is a front view illustrating lift down and up states of the push device for laser welding in FIG. 2.

As illustrated in FIGS. 1 and 2, in the cylindrical secondary battery 30, a can has an opened upper end, and the CID mat (refer to FIG. 8) among components constituting the cap assembly 34 is disposed at one side of the opened upper end for welding. The CID mat 34a is adsorbed to the adsorption jig (not shown) for being welded with a lid (not shown) and disposed at a side of the pusher unit 700 in a state of being temporarily fixed on a sub-frame 20. The laser welding is performed in a state in which the pusher unit 700 pushes the CID mat 34a in an adsorption jig direction (the front direction in FIGS. 1 and 2), and the CID mat 34a closely contacts the adsorption jig.

As illustrated in FIG. 9, the worker lifts the support arm 500 by rotating the pusher assembly part 510 of the support arm 500 in a counter-clockwise direction when the pusher unit 700 is mounted or replaced. The support arm 500 is rotated in the counter-clockwise direction with respect to the hinge part 152. In the support arm 500 at the lift up position, one side in an opposite direction of the catching groove 534 of the rotation support part 530 contacts the restriction rib 1564 of the guide part 156 of the main body.

In this state, an angle between the support arm 500 and the top surface of the support block 1560 of the guide part 156 is an obtuse angle equal to or greater than about 90°. Assuming that a virtual central line B exists at a position at which a longitudinal directional central line A of the support arm 500 is perpendicular to the top surface of the support block 1560, the support arm 500 at the lift up position is disposed at a left side more than the virtual central line B. Thus, the center of gravity is positioned at the left side more than the virtual central line B although the pusher unit 700 is assembled to the pusher assembly part 510 of the support arm 500. Thus, since the support arm 500 may not be rotated to the lift down position, the lift up state may be maintained.

When the pusher unit 700 is completely mounted or replaced, the worker may move the support arm 500 to the lift down position by rotating the pusher assembly part 510 of the support arm 500 in a clockwise direction. The support arm 500 is rotated in the clockwise direction with respect to the hinge part 152. At the lift down position, the catching groove 534 of the rotation support part 530 of the support arm 500 is caught by the body 1540 of the coupling part 154 of the main body 100.

In this state, a lower surface of the rotation support part 530 closely contacts the top surface 1560a of the support block 1560. Also, at the lift down position, the support arm 500 may be coupled to the coupling part 154, and a weight of the pusher unit 700 acts downward in FIG. 9. Thus, the support arm 500 may maintain the lift down state.

In the embodiment of the present disclosure, as the support arm of the push device pushing the adsorption jig is rotatably provided, the working space may be secured when the pusher unit is replaced. Thus, the pusher unit may be easily replaced to exhibit the effect of improving the workability of the worker.

Also, in the embodiment of the present disclosure, the material and the structure of the pusher unit may improve to exhibit the effect of enhancing the welding efficiency.

The above is merely an embodiment of the present disclosure, and thus, the present disclosure is not limited to the foregoing embodiment. Accordingly, it will be understood by those of ordinary skill in the art that various changes in form and details may be made without departing from the scope of the present disclosure as set forth in the following claims.

## Claims

1. A push device (P) for laser welding, comprising:
a main body (100) configured to be coupled to one side of a welding apparatus and a pusher unit (700), **characterized in that** said main body comprises a hinge part (152) disposed at one side thereof and a coupling part (154) spaced apart from the hinge part (152); said push device further comprising:
a support arm (500) having one end rotatably coupled to the hinge part (152) and the other end extending in a direction opposed to the hinge part (152) and rotatable within a preset angle range; wherein the pusher unit (700) is detachably coupled to the other end of the support arm (500) configured to push an adsorption jig configured to adsorb an object to be welded at a welding position, wherein the support arm (500) is rotatable from a lift down position at which it is coupled to the coupling part (154) and movable to a lift up position at which it is rotated in a direction away from the coupling part (154).

2. A push device (P) according to claim 1, wherein the hinge part (152) and the coupling part (154) are disposed on the same straight line, and
the main body (100) further comprises a guide part (156) spaced below from the hinge part (152) and the coupling part (154) and disposed parallel to the support arm (500) while supporting a lower side of the support arm (500) in a state in which the support arm (500) is coupled to the coupling part (154).

3. A push device (P) according to claim 2, wherein the support arm (500) forms an obtuse angle with the guide part (156) at the lift up position.

4. A push device (P) according to any one of claims 1 to 3, wherein the coupling part (154) comprises a cylindrical body (1540) and a head (1542) having a diameter greater than that of the body (1540) and integrated with the body (1540), and
a catching groove (534) inserted to the body (1540) is defined at one side of the support arm (500).

5. A push device (P) according to any one of claims 2 to 4, wherein the guide part (156) comprises a support block (1560) disposed parallel to the support arm (500) in a state in which the support arm (500) is coupled to the coupling part (154), a guide rib (1562) protruding upward from one side end of the support block (1560), and a restriction rib (1564) extending upward from the other side end of the support block (1560).

6. A push device (P) according to claim 5, wherein the support arm (500) is disposed between the guide rib (1562) and the main body (100) at the lift down position and supported by contacting one side of the restriction rib (1564) at the lift up position.

7. A push device (P) according to any one of claims 1 to 6, wherein the pusher unit (700) comprises: a push plate (710) detachably coupled to the other end of the support arm (500); a support bracket (720) coupled to one side of the push plate (710); and a pusher (730) coupled to the push plate (710) and supported by the support bracket (720) configured to push the adsorption jig.

8. A push device (P) according to claim 7, wherein the push plate (710) comprises a reflection surface (714) having a cone shape in which a hollow hole through which a laser beam may pass is defined and having a diameter gradually increasing from the hollow hole to an edge thereof in an irradiated direction of the laser beam and a pusher holder (712) protruding in a direction opposed to the reflection surface (714) and coupled with the pusher (730).

9. A push device (P) according to claim 8, wherein the pusher holder (712) has a hexahedral shape in which both ends of a surface facing the pusher (730) have a ' 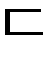 '-shape surrounding both side surfaces or top and bottom surfaces, which face each other, of the pusher (730), and an air inflow hole (712a) is defined in each of both facing side surfaces.

10. A push device (P) according to claim 9, wherein the pusher unit (700) further comprises an air supply part (760) coupled with the air inflow hole (712a) to supply external air, optionally wherein the push plate (710) further comprises one pair of air injection holes (714a) that face each other on the reflection surface (714) and communicate with the air inflow hole (712a).

11. A push device (P) according to any one of claims 7 to 10, wherein the pusher (730) comprises: a pusher body (731) having an upper portion bent in a direction of the reflection surface (714) and a lower portion bent in a direction opposed to the reflection surface (714); a push surface (734) protruding in a direction from the bent lower portion of the pusher body (731) that is away from the reflection surface (714); and a welding guide hole (735) passing through the push surface (734) and having an opened upper end, so that a laser beam may pass therethrough.

12. A push device (P) according to claim 11, wherein, in a state in which a bent upper portion of the pusher body (731) closely contacts an upper side of the pusher holder (712), the pusher body (731) is coupled to the pusher holder (712) by a plurality of guide pins (740) passing through the bent upper portion of the pusher body (731) and inserted in the upper side of the pusher holder (712) and a coupling member (750) configured to couple the bent upper portion and the upper side of the pusher holder (712).

13. A push device (P) according to any one of claims 1 to 12, wherein the main body (100) is obtained as a plurality of blocks (110, 130, 150) that are mutually movably coupled, and the support arm (500) is coupled to one of the blocks (110, 130, 150), and
wherein the push device (P) further comprises a plurality of micro-meters (300) installed on the main body (100) and arranged at different angles to move a position of one coupled with the support arm (500) among the blocks (110, 130, 150) from another.

14. A push device (P) according to any one of claims 1 to 13, wherein the pusher unit (700) may be mounted or replaced at the lift up position.

## Patentansprüche

1. Schiebevorrichtung (P) zum Laserschweißen, Folgendes umfassend:
einen Hauptkörper (100), der dafür konfiguriert ist, mit einer Seite einer Schweißvorrichtung gekoppelt zu werden, und eine Schiebereinheit (700), **dadurch gekennzeichnet, dass** der Hauptkörper Folgendes umfasst:
einen Scharnierteil (152), der an einer Seite davon angeordnet ist, und einen Kopplungsteil (154), der von dem Scharnierteil (152) beabstandet ist;
wobei die Schiebevorrichtung ferner Folgendes umfasst:
einen Stützarm (500), dessen eines Ende drehbar mit dem Scharnierteil (152) gekoppelt ist und dessen anderes Ende sich in einer dem Scharnierteil (152) entgegengesetzten Richtung erstreckt und innerhalb eines voreingestellten Winkelbereichs drehbar ist,
wobei die Schiebereinheit (700) lösbar mit dem anderen Ende des Stützarms (500) gekoppelt ist, das dafür konfiguriert ist, eine Aufnahmevorrichtung zu schieben, die dafür konfiguriert ist, ein zu schweißendes Objekt an einer Schweißposition aufzunehmen, wobei der Stützarm (500) von einer Abwärtshubposition, in der er mit dem Kopplungsteil (154) gekoppelt ist, drehbar und in eine Aufwärtshubposition bewegbar ist, in der er in einer Richtung weg von dem Kopplungsteil (154) gedreht wird.

2. Schiebevorrichtung (P) nach Anspruch 1, wobei der Scharnierteil (152) und der Kopplungsteil (154) auf der gleichen geraden Linie angeordnet sind, und
der Hauptkörper (100) ferner einen Führungsteil (156) umfasst, der von dem Scharnierteil (152) und dem Kopplungsteil (154) nach unten beabstandet und parallel zu dem Stützarm (500) angeordnet ist, während er eine Unterseite des Stützarms (500) in einem Zustand stützt, in dem der Stützarm (500) mit dem Kopplungsteil (154) gekoppelt ist.

3. Schiebevorrichtung (P) nach Anspruch 2, wobei der Stützarm (500) in der Aufwärtshubposition einen stumpfen Winkel mit dem Führungsteil (156) ausbildet.

4. Schiebevorrichtung (P) nach einem der Ansprüche 1 bis 3, wobei der Kopplungsteil (154) einen zylindrischen Körper (1540) und einen Kopf (1542) umfasst, der einen größeren Durchmesser als der Körper (1540) aufweist und mit dem Körper (1540) integriert ist, und
eine in den Körper (1540) eingefügte Fangrille (534) an einer Seite des Stützarms (500) definiert ist.

5. Schiebevorrichtung (P) nach einem der Ansprüche 2 bis 4, wobei der Führungsteil (156) einen Stützblock (1560), der in einem Zustand, in dem der Stützarm (500) mit dem Kopplungsteil (154) gekoppelt ist, parallel zum Stützarm (500) angeordnet ist, eine Führungsrippe (1562), die von einem seitlichen Ende des Stützblocks (1560) nach oben hervorsteht, und eine Begrenzungsrippe (1564), die sich vom anderen seitlichen Ende des Stützblocks (1560) nach oben erstreckt, umfasst.

6. Schiebevorrichtung (P) nach Anspruch 5, wobei der Stützarm (500) in der Abwärtshubposition zwischen der Führungsrippe (1562) und dem Hauptkörper (100) angeordnet ist und in der Aufwärtshubposition durch das Berühren einer Seite der Begrenzungsrippe (1564) abgestützt wird.

7. Schiebevorrichtung (P) nach einem der Ansprüche 1 bis 6, wobei die Schiebereinheit (700) Folgendes umfasst: eine Schiebeplatte (710), die lösbar mit dem anderen Ende des Stützarms (500) gekoppelt ist; eine Stützkonsole (720), die mit einer Seite der Schiebeplatte (710) gekoppelt ist; und einen Schieber (730), der mit der Schiebeplatte (710) gekoppelt ist und durch die Stützkonsole (720) gestützt wird, der dafür konfiguriert ist, die Aufnahmevorrichtung zu schieben.

8. Schiebevorrichtung (P) gemäß Anspruch 7, wobei die Schiebeplatte (710) eine Reflexionsfläche (714), die eine Kegelform aufweist, in der ein hohles Loch definiert ist, durch das ein Laserstrahl hindurchtreten kann, und einen Durchmesser aufweist, der von dem hohlen Loch zu einem Rand davon in einer Bestrahlungsrichtung des Laserstrahls allmählich zunimmt, und einen Schieberhalter (712), der in einer der Reflexionsfläche (714) entgegengesetzten Richtung hervorsteht und mit dem Schieber (730) gekoppelt ist, umfasst.

9. Schiebevorrichtung (P) nach Anspruch 8, wobei der Schieberhalter (712) eine hexaedrische Form aufweist, bei der beide Enden einer dem Schieber (730) zugewandten Fläche eine '⊏'-Form aufweisen, die beide Seitenflächen oder Ober- und Unterseiten des Schiebers (730), die einander zugewandt sind, umgibt, und ein Lufteinlassloch (712a) in jeder von beiden einander zugewandten Seitenflächen definiert ist.

10. Schiebevorrichtung (P) gemäß Anspruch 9, wobei die Schiebereinheit (700) ferner einen Luftzuführungsteil (760) umfasst, der mit dem Lufteinlassloch (712a) gekoppelt ist, um externe Luft zuzuführen, wobei die Schiebeplatte (710) optional ferner ein Paar von Lufteinblaslöchern (714a) umfasst, die einander auf der Reflexionsfläche (714) zugewandt sind und mit dem Lufteinlassloch (712a) kommunizieren.

11. Schiebevorrichtung (P) nach einem der Ansprüche 7 bis 10, wobei der Schieber (730) Folgendes umfasst einen Schieberkörper (731) mit einem oberen Abschnitt, der in eine Richtung der Reflexionsfläche (714) gebogen ist, und einem unteren Abschnitt, der in eine Richtung entgegengesetzt zur Reflexionsfläche (714) gebogen ist; eine Schiebefläche (734), die in einer Richtung von dem gebogenen unteren Abschnitt des Schieberkörpers (731) hervorsteht, die von der Reflexionsfläche (714) abgewandt ist; und ein Schweißführungsloch (735), das durch die Schiebefläche (734) hindurchgeht und ein offenes oberes Ende aufweist, sodass ein Laserstrahl hindurchgehen kann.

12. Schiebevorrichtung (P) nach Anspruch 11, wobei in einem Zustand, in dem ein gebogener oberer Abschnitt des Schieberkörpers (731) eine Oberseite des Schieberhalters (712) eng berührt, der Schieberkörper (731) mit dem Schieberhalter (712) durch eine Vielzahl von Führungsstiften (740), die durch den gebogenen oberen Abschnitt des Schieberkörpers (731) hindurchgehen und in die Oberseite des Schieberhalters (712) eingesetzt sind, und ein Kopplungselement (750), das dafür konfiguriert ist, den gebogenen oberen Abschnitt und die Oberseite des Schieberhalters (712) zu koppeln, gekoppelt ist.

13. Schiebevorrichtung (P) nach einem der Ansprüche 1 bis 12, wobei der Hauptkörper (100) als eine Vielzahl von Blöcken (110, 130, 150) erlangt wird, die gegenseitig beweglich gekoppelt sind, und der Stützarm (500) mit einem der Blöcke (110, 130, 150) gekoppelt ist, und
wobei die Schiebevorrichtung (P) ferner eine Vielzahl von Messschrauben (300) umfasst, die an dem Hauptkörper (100) installiert und in verschiedenen Winkeln angeordnet sind, um eine Position eines mit dem Stützarm (500) gekoppelten der Blöcke (110, 130, 150) gegenüber einem anderen zu bewegen.

14. Schiebevorrichtung (P) nach einem der Ansprüche 1 bis 13, wobei die Schiebereinheit (700) in der Aufwärtshubposition montiert oder ausgetauscht werden kann.

## Revendications

1. Dispositif poussoir (P) pour soudage au laser, comprenant :
un corps principal (100) configuré pour être couplé à un côté d'un appareil de soudage et à une unité formant poussoir (700), **caractérisé en ce que** ledit corps principal comprend :
une partie charnière (152) disposée au niveau d'un côté de celui-ci et une partie de couplage (154) espacée de la partie charnière (152) ;
ledit dispositif poussoir comprenant en outre :
un bras de support (500) présentant une extrémité couplée de manière rotative à la partie charnière (152) et l'autre extrémité s'étendant dans un sens opposé à la partie charnière (152) et pouvant subir une rotation selon une plage angulaire prédéfinie ;
dans lequel l'unité formant poussoir (700) est couplée de façon amovible à l'autre extrémité du bras de support (500) configuré pour pousser un dispositif de fixation configuré pour recevoir un objet à souder en une position de soudage, dans lequel le bras de support (500) peut subir une rotation depuis une position abaissée à laquelle il est couplé à la partie de couplage (154) et est déplaçable vers une position relevée, au niveau de laquelle il est tourné dans un sens s'éloignant de la partie de couplage (154).

2. Dispositif poussoir (P) selon la revendication 1, dans lequel la partie charnière (152) et la partie de couplage (154) sont disposées sur la même ligne droite, et
le corps principal (100) comprend en outre une partie de guidage (156) espacée en dessous de la partie charnière (152) et de la partie de couplage (154) et disposée parallèlement au bras de support (500) tout en supportant un côté inférieur du bras de support (500) lorsque le bras de support (500) est couplé à la partie de couplage (154).

3. Dispositif poussoir (P) selon la revendication 2, dans lequel le bras de support (500) forme un angle obtus avec la partie de guidage (156) en position relevée.

4. Dispositif poussoir (P) selon l'une quelconque des revendications 1 à 3, dans lequel la partie de couplage (154) comprend un corps (1540) cylindrique et une tête (1542) présentant un diamètre supérieur à celui du corps (1540) et intégrée au corps (1540), et
une rainure d'accrochage (534) s'insérant dans le corps (1540) est définie sur un côté du bras de support (500).

5. Dispositif poussoir (P) selon l'une quelconque des revendications 2 à 4, dans lequel la partie de guidage (156) comprend un bloc de support (1560) disposé parallèlement au bras de support (500) dans un état dans lequel le bras de support (500) est couplé à la partie de couplage (154), une nervure de guidage (1562) faisant saillie vers le haut à partir d'une extrémité latérale du bloc de support (1560), et une nervure de limitation (1564) s'étendant vers le haut à partir de l'autre extrémité latérale du bloc de support (1560).

6. Dispositif poussoir (P) selon la revendication 5, dans lequel le bras de support (500) est disposé entre la nervure de guidage (1562) et le corps principal (100) en position abaissée et supporté par le contact avec un côté de la nervure de limitation (1564) en position relevée.

7. Dispositif poussoir (P) selon l'une quelconque des revendications 1 à 6, dans lequel l'unité formant poussoir (700) comprend : une plaque poussoir (710) couplée de façon amovible à l'autre extrémité du bras de support (500) ; une équerre de support (720) couplée à un côté de la plaque poussoir (710) ; et un poussoir (730) couplé à la plaque poussoir (710) et supporté par l'équerre de support (720) configurée pour pousser le dispositif de fixation.

8. Dispositif poussoir (P) selon la revendication 7, dans lequel la plaque poussoir (710) comprend une surface de réflexion (714), présentant une forme conique dans laquelle est défini un trou creux à travers lequel peut passer un faisceau laser et présentant un diamètre augmentant progressivement depuis le trou creux jusqu'à un bord de celle-ci dans un sens de rayonnement du faisceau laser, et un support de poussoir (712) faisant saillie dans un sens opposé à la surface de réflexion (714) et étant couplé au poussoir (730).

9. Dispositif poussoir (P) selon la revendication 8, dans lequel le support de poussoir (712) est de forme hexaèdre selon laquelle les deux extrémités d'une surface tournée vers le poussoir (730) ont une forme en « 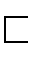 » entourant les deux surfaces latérales ou surfaces supérieure et inférieure, en vis-à-vis l'une de l'autre, du poussoir (730), et un trou d'entrée d'air (712a) est défini dans chacune des deux surfaces latérales en vis-à-vis.

10. Dispositif poussoir (P) selon la revendication 9, dans lequel l'unité formant poussoir (700) comprend en outre une partie d'apport d'air (760) couplée au trou d'entrée d'air (712a) pour apporter de l'air externe, facultativement dans lequel la plaque poussoir (710) comprend en outre une paire de trous d'injection d'air (714a) en vis-à-vis sur la surface de réflexion (714) et communiquant avec le trou d'entrée d'air (712a).

11. Dispositif poussoir (P) selon l'une quelconque des revendications 7 à 10, dans lequel le poussoir (730) comprend : un corps de poussoir (731) présentant une partie supérieure recourbée en direction de la surface de réflexion (714) et une partie inférieure recourbée à une direction opposée à la surface de réflexion (714) ; une surface poussoir (734) faisant saillie à partir de la partie inférieure recourbée du corps de poussoir (731) en s'éloignant de la surface de réflexion (714) ; et un trou de guidage de soudage (735) traversant la surface poussoir (734) et présentant une extrémité supérieure ouverte permettant le passage d'un faisceau laser.

12. Dispositif poussoir (P) selon la revendication 11, dans lequel, dans un état dans lequel une partie supérieure recourbée du corps de poussoir (731) est en contact étroit avec un côté supérieur du support de poussoir (712), le corps de poussoir (731) est couplé au support de poussoir (712) par une pluralité de goupilles de guidage (740) traversant la partie supérieure recourbée du corps de poussoir (731) et insérées dans le côté supérieur du support de poussoir (712), et à un élément de couplage (750) configuré pour coupler la partie supérieure recourbée et le côté supérieur du support de poussoir (712).

13. Dispositif poussoir (P) selon l'une quelconque des revendications 1 à 12, dans lequel le corps principal (100) est obtenu sous la forme d'une pluralité de blocs (110, 130, 150) couplés de façon mutuellement mobile, et le bras de support (500) est couplé à l'un des blocs (110, 130, 150), et
dans lequel le dispositif poussoir (P) comprend en outre une pluralité de micromètres (300) installés sur le corps principal (100) et agencés selon différents angles pour faire varier une position d'un parmi les blocs (110, 130, 150) couplé au bras de support (500) par rapport aux autres.

14. Dispositif poussoir (P) selon l'une quelconque des revendications 1 à 13, dans lequel l'unité formant poussoir (700) peut être montée ou remplacée, en position relevée.
